# EUROPEAN PATENT APPLICATION

(11) **EP 1 234 804 A1**
(43) Date of publication of application: **28.08.2002**
(21) Application number: 02380041.0
(22) Date of filing: 22.02.2002
(51) Int. Cl.: C02F 3/10

(54) **An anoxic and/or aerobic biological reactor for the purification of waste water and/or liquid residues with high concentrations of contaminating loads**

(30) Priority: 23.02.2001 ES 200100431
(71) Applicant: Ros Roca, S.A., 25300 Tarrega (Lleida) (ES)
(72) Inventor: Roca Enrich, Ramon, 25300 Tarrega (Lleida) (ES)
(74) Representative: Aragones Forner, Rafael Angel

(57) **Abstract**

An anoxic and/or aerobic biological reactor (R) for the purification of waste water and/or liquid residues with high concentrations of contaminating and/or toxic loads.

The pieces of fabric forming the support elements (S) as per the invention consist in a rough, tough, open texture special fabric facilitating the binding onto it of the bacteria and microorganisms to form the biofilms on both sides of the fabric, this latter being made of plastics material and having a high mechanical strength especially in the vertical direction. The fabric is submitted to a previous scraping/carding operation that increases its surface roughness to thus improve the binding.

The open enclosure can be rectangular and of the piston flow type or oblong and of the roundabout type. The support elements can be arranged in the enclosure in a parallel arrangement with respect to the major longitudinal axis, and/or in a spike like arrangement and with a spacing from the longitudinal axis, in a slanted arrangement on either side thus being at an angle with respect to said longitudinal axis.

## Description

The present invention has as its object an improved anoxic and/or aerobic biological reactor for the purification of waste water and/or liquid residues with high concentrations of contaminating and/or toxic loads.

Several branches of technology such as livestock husbandry, industry, urbanism, etc. are at present producing great quantities of solid and liquid residues having a high concentration of contaminating and/or toxic loads, and it is being thus far very difficult to dispose of these residues having these contaminating and in many cases highly toxic loads having a BOD (BOD = biochemical oxygen demand) ranging from 30,000 to 100,000 and thus not allowing to carry out an adequate treatment or purification.

The applicant is the holder of the Spanish patent No. ES-2151388 that obviates the above-mentioned drawbacks, said patent ES-2151388 having as its object an anoxic and/or aerobic biological reactor being specially apt to be used for the treatment of liquid residues comprising pig stock and cattle liquid manures, said reactor bringing about a substantial progress in the treatment of said residues.

The anoxic and/or aerobic biological reactor for the purification of waste water and/or liquid residues with high concentrations of contaminating and/or toxic loads being the object of the aforementioned patent ES-2151388 is essentially of the type comprising an open enclosure through which the waste water and/or liquid residues to be purified are made to flow, said open enclosure containing a plurality of support elements being provided for the binding of the bacteria, the support elements in said enclosure remaining totally submerged in the waste water and/or liquid residues, said reactor allowing air and/or oxygen diffusing or propelling means to act from the bottom of the enclosure when operating in an aerobic manner and allowing driving means to act in order to impel the flow of the waste water and/or liquid residues throughout the enclosure to thus facilitate the action of the bacteria for the biological degradation of the waste water and/or liquid residues having a high contaminating load.

In said patent ES-2151388 the support elements consist in pieces of open textured, roughened fabric being arranged in a vertical, mutually spaced and parallel and fixed arrangement in order to thus create between them passages facilitating the binding of the bacteria and microorganisms on the support elements thus forming biofilms on both sides of the fabric.

Said support elements are arranged in a spaced relationship with respect to the bottom of the enclosure in order to thus allow the air and/or oxygen being supplied during the aerobic operation by the propelling means being arranged on the bottom to be uniformly distributed to the support elements to thus facilitate said binding.

The biological reactor of the aforementioned patent is apt to be used in the purification of liquid residues comprising pig stock and cattle liquid manures or dump lixiviates, or in the purification of waste water preferably being of urban origin.

The applicant has realized that the support elements being used in the previous patent ES-2151388 have several drawbacks related with the reactor's efficiency, said drawbacks determining a low efficiency due to the fact that said support elements do not allow a proper deposition of the biofilm on them.

In order to obviate such drawbacks the biological reactor being the object of the instant invention incorporates some improvements in the structure of said support elements, these latter for such a purpose being made of a rough, dense, mechanically tough special fabric and being arranged in such a way as to increase the efficiency of the biological reactor by facilitating the deposition of the biofilm on both sides of the support elements, these latter ultimately bringing about an increase in the efficiency of the facility incorporating the biological reactor in question.

According to what has been set forth above the anoxic and/or aerobic biological reactor being the object of the present invention is essentially characterized in that the pieces of fabric forming the support elements consist in a rough, dense, mechanically tough special fabric of the open taffeta type facilitating the binding of the bacteria and microorganisms onto it thus forming the biofilms on both sides of the fabric, this latter being made of a rough plastics material of high mechanical strength both in the vertical and horizontal directions, the strength along the vertical direction being the highest to thus support the weight of the support element with the biofilms bound onto its sides.

According to the invention said rough, dense, mechanically tough special fabric is submitted to a scraping operation by way of a carding operation previous to its assembly as a support element thus being provided with floss on both sides of the fabric, this latter's surface roughness being thus increased and therefore enhancing the binding of the bacteria and microorganisms forming the biofilms.

The support elements being formed with said rough, dense, mechanically tough special fabric are arranged in a mutually parallel arrangement and in an also parallel arrangement with respect to the flow of the waste water and/or liquid residues along the main axis of the open enclosure thus defining the flow passages between adjacent support elements.

According to the invention the open enclosure can have a rectangular configuration of the so-called piston flow type, or an oblong configuration with rounded ends of the so-called roundabout type.

The present invention provides for the support elements formed with said rough, dense, mechanically tough special fabric to be arranged in a mutually parallel arrangement in two arrays being centrally spaced with respect to a longitudinal, central area of the open enclosure forming a main central passage for the flow of the waste water and/or liquid residues, said support elements in each array being arranged in a slanted arrangement with respect to said central flow passage and in a mutually parallel arrangement thus defining between them respective passages for the flow of the liquid to be purified, these latter flow passages extending by way of flow branchings from the central flow and thus enhancing the binding of the bacteria and microorganisms onto the support elements while at the same time being in operational combination with deflector plates being arranged in the open enclosure to enhance said flow.

According to the invention the two arrays of support elements being arranged in a spaced arrangement with respect to the main, central passage for the flow of the liquid to be purified and the support elements being arranged in a mutually parallel arrangement and in a slanted arrangement with respect to said flow passage and defining between them the passages for the flow of said liquid are arranged in an essentially spike like arrangement and comprise two lateral deflector plates at the inflow end of the two arrays of support elements, said deflector plates being arranged in a converging, V-shaped arrangement and being centrally spaced in correspondence with the main flow passage, and two lateral deflector plates at the outflow end of the two arrays, these latter deflector plates being centrally spaced and in operational combination with respective small, adjustable swinging gates being provided by way of butterfly valves improving the distribution of the flow of the liquid to be purified into the passages.

According to the invention the open enclosure can have a rectangular configuration of the so-called piston flow type, or an oblong configuration with rounded ends of the so-called roundabout type.

The invention provides for the rough, dense, mechanically tough fabric to be made of polypropylene, and for its yarns to be made of mutually twisted multifilament strands.

These and other characteristics will be best made apparent by the following detailed description whose understanding will be made easier by the accompanying two sheets of drawings showing a practical embodiment cited only by way of example not limiting the scope of the present invention.

In said drawings:
Fig. 1 is a fragmentary and perspective view of a support element.
Fig. 2 is an elevational view of a fragment of the rough, dense, mechanically tough fabric having been made as per a plain weave and forming the support element.
Fig. 3A is an enlarged, diagrammed sectional view of the fabric as per section line IIIA-IIIA in Fig. 2 showing the biofilms being bound onto both sides of the fabric forming the support. Fig. 3B is an enlarged, diagrammed sectional view of the fabric as per section line IIIB-IIIB in Fig. 2.
Fig. 4 is an elevational view of a fragment of the rough, dense, mechanically tough fabric having been made as per a rib weave and forming the support element.
Fig. 5A is an enlarged, diagrammed sectional view of the fabric as per section line VA-VA in Fig. 4 showing the biofilms being bound onto both sides of the fabric forming the support. Fig. 5B is an enlarged, diagrammed sectional view of the fabric as per section line VB-VB in Fig. 4.
Fig. 6 is a diagrammed, elevational, longitudinal section of the biological reactor as per section line VI-VI in Fig. 9.
Fig. 7 is a fragmentary, diagrammed plan-view of the biological reactor shown in Fig. 9 showing the parallel and spaced arrangement of the support elements as per the flow of the liquid to be purified.
Fig. 8 is a fragmentary, diagrammed plan-view of the biological reactor shown in Fig. 13 showing the spike like arrangement of the support elements with respect to the main central passage for the flow of the liquid to be purified.
Fig. 9 is a plan-view of the biological reactor forming part of a purification plant and having the rectangular configuration of the so-called piston flow type, this view showing the support elements being positioned in a mutually parallel and spaced arrangement along the flowing direction of the liquid to be purified.
Fig. 10 is a plan-view of the biological reactor forming part of a purification plant and having the rectangular configuration of the so-called piston flow type, this view showing the support elements being arranged in two centrally spaced arrays and in a spike like, V-shaped arrangement.
Fig. 11 is a plan-view of the biological reactor forming part of a purification plant and having the rectangular configuration of the so-called roundabout type, this view showing the support elements being positioned in a mutually parallel and spaced arrangement along the flowing direction of the liquid to be purified.
Fig. 12 is a plan-view of the biological reactor forming part of a purification plant and having the rectangular configuration of the so-called roundabout type, this view showing the support elements being arranged in two centrally spaced arrays and positioned in a spike like, V-shaped arrangement in each half of the open enclosure.
Fig. 13 is a diagrammed plan-view of the biological reactor forming part of the purification plant, having the so-called roundabout configuration, and in one of the longitudinal halves showing the support elements being arranged in a spike like, V-shaped arrangement.

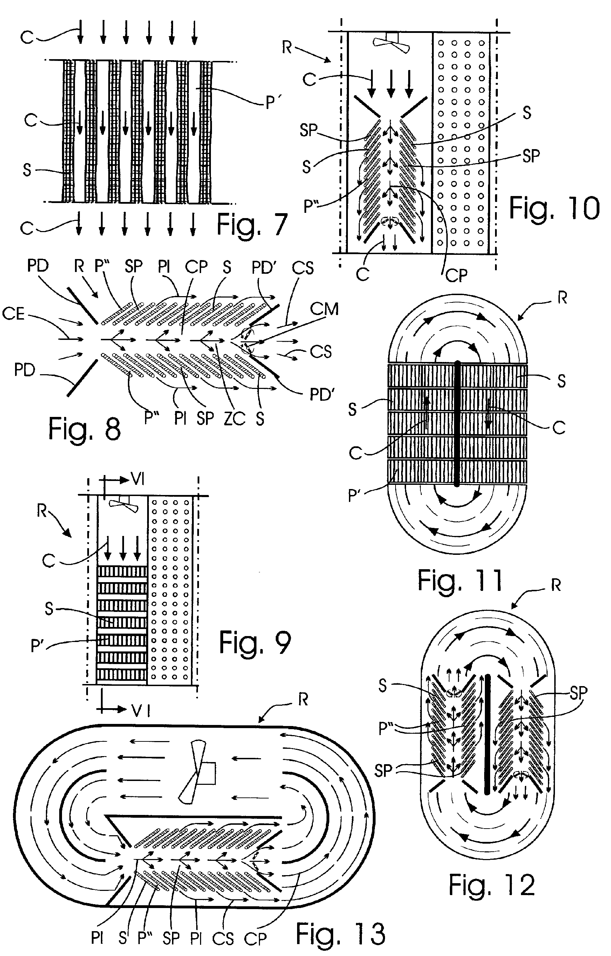

The open reactor R of the piston flow or of the roundabout type of the invention can of course comprise a mixed arrangement with one half or side having the support elements S arranged in a parallel arrangement as shown in Figs. 9 and 11 or in two centrally spaced arrays of mutually parallel support elements being arranged in a spike like arrangement as shown in Figs. 10 and 13, with one side or half being arranged in one of said arrangements and with the other side being arranged in the other arrangement.

According to the drawings the support elements S as per the present invention are formed by pieces of a rough, dense, mechanically tough special fabric being of the open taffeta type substantially facilitating and improving the binding of the bacteria and microorganisms of the liquid to be purified onto both sides of the fabric, said bacteria and microorganisms thus forming on each of said sides a respective biofilm as will be explained in detail hereinafter.

The pieces of fabric are made of a rough plastics material having a high mechanical strength both in the vertical and horizontal directions, the strength in the vertical direction being the highest and thus allowing to easily support the weight of the support element S with the biofilms bound onto both its sides.

According to the invention the rough, dense, mechanically tough special fabric forming the support elements S forming part of the associated purification plant is preferably submitted before forming the corresponding support element S to a scraping operation by way of a carding operation thus being provided with a floss being derived from the very fabric on both its sides, said floss thus increasing the surface roughness of said fabric and enhancing the binding of the bacteria and microorganisms forming the biofilms.

The pieces of fabric being provided to form the support elements comprise an open texture fabric of the taffeta type wherein each of the yarns forming the fabric comprises a plurality of mutually twisted filaments being made of polypropylene, said yarns forming the aforementioned rough, dense, mechanically tough special fabric. Said fabric can be of many types and of a proper sort, two types of fabric having been found to have very suitable features making them apt to be used to form the support elements being used in the biological reactor of the invention forming part of the associated plant.

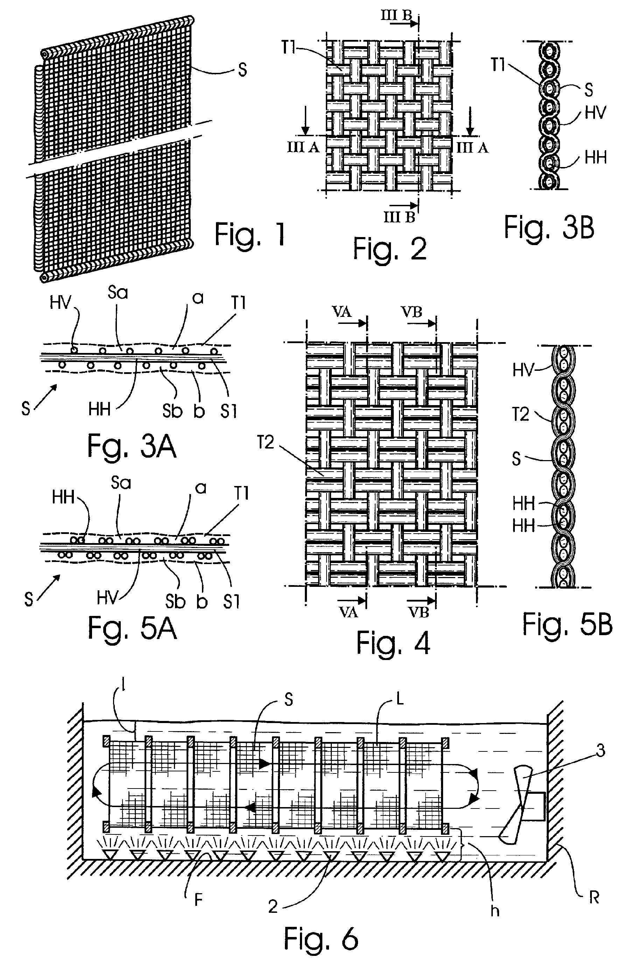

Fig. 2 illustrates a preferred example of a piece of fabric T1 of the taffeta, end-and-end lease, plain weave type, said fabric having a weight of about 470 grs./m², a horizontal strength of a bout 410 kg/5 cm, and a vertical strength of about 460 kg/5 cm.

Fig. 3A diagrammatically illustrates a cross-section of the fabric T1 being shown in Fig. 2 and acting as a support element S in the biological reactor R of the invention during the operation of the associated plant. Said Fig. 3A shows in a sectional view the fabric T1 forming the corresponding support element S1 as per the horizontal section line IIIA-IIIA in Fig. 2, thereby showing a horizontal yarn HH being crossed by respective, alternate vertical yarns HV and thus forming the support element S1, this latter on each of the sides a and b of the fabric showing the respective biofilms Sa and Sb comprising the binding of the bacteria and microorganisms. For more simplicity of the drawing Fig. 3B does only show a sectional view of a piece of said fabric T1 as per the vertical section line IIIB-IIIB in Fig. 2.

Fig. 4 illustrates a preferred example of a piece of fabric T2 of the taffeta, end and two lease, rib weave type, said fabric having a weight of about 650 grs./m², a horizontal strength of some 500 kg/5 cm, and a vertical strength of some 600 kg/5 cm.

Fig. 5A diagrammatically illustrates a cross-section of the fabric T2 being shown in Fig. 4 and acting as a support element S in the biological reactor R of the invention during the operation of the associated plant. Said Fig. 5A shows in a sectional view the fabric T2 forming the corresponding support element S2 as per the vertical section line VA-VA in Fig. 4, thereby showing a vertical yarn HV being crossed by a pair of alternate, horizontal yarns HH and thus forming the support element S2, this latter on each of the sides a and b of the fabric showing the respective biofilms Sa and Sb comprising the binding of the bacteria and microorganisms. For more simplicity of the drawing Fig. 5B does only show a sectional view of a piece of said fabric T2 as per the vertical section line VB-VB in Fig. 4.

As illustrated in the Figures, and especially in Fig. 6, the support elements S being formed by means of any of the fabric types having been described above or by means of any other fabrics providing similar mechanical features and being of a rough, dense and mechanically tough type are as per the invention arranged in such a way that they are submerged in the liquid L to be purified, in such a way that the lower end of the support elements S is spaced at a distance h from the bottom F of the open enclosure R forming the biological reactor, whereas the upper end of said support elements is at a distance 1 from the top level of the liquid L to be purified, as diagrammatically shown in said Fig. 6. As can be observed, the air and/or oxygen diffusing or propelling means 2 are arranged on the bottom F of the open enclosure R, said reactor incorporating the corresponding flow impeller member 3 such as a fan of the like.

As illustrated in Figs. 7, 9 and 11, the support elements S are arranged (in a submerged position as shown in Fig. 6) in a mutually parallel arrangement and in an also parallel relationship with respect to the flow C of the waste water and/or liquid residues to be purified along the main axis of the open enclosure in question thus defining the flow C in the flow passages P' being defined between the consecutive support elements S.

Otherwise, and as shown with some detail in Fig. 8 and in Figs. 10, 12 and 13, the invention provides for the support elements S formed by means of any of the fabrics T1 or T2 of a rough, dense and mechanically tough type to be arranged in a mutually parallel arrangement and in two arrays SP being centrally spaced with respect to a longitudinal, central area ZC of the open enclosure R forming a main, central passage CP for the flow of the waste water and/or liquid residues to be purified. The support elements S of the two spaced arrays SP are arranged in a slanted arrangement with respect to said central flow passage CP and are arranged in a mutually parallel arrangement thus defining between them (between the consecutive support elements) respective passages P'' for the flow of the liquid to be purified, these latter flow passages extending by way of flow branchings from the main central flow CP. Said arrangement in two arrays of centrally spaced and mutually parallel elements being arranged in a slanted arrangement with respect to the central passage enhances the binding of the bacteria and microorganisms of the liquid to be purified onto the support elements S, said binding thus creating the aforementioned biofilms Sa and Sb on the respective sides a and b of the support element S being formed by respective pieces of fabric of the T1 or T2 type or of any other type having similar features.

Referring now to the same Figs. 8, 10, 11 and 13, and especially to Fig. 8, the arrangement of the support elements S in the open enclosure R of the biological reactor forming part of the associated purification plant is as has been mentioned an arrangement in two arrays SP of support elements S being arranged in a spaced arrangement with respect to the main, central passage CP for the flow of the liquid to be purified, in said arrangement the support elements S of each array SP being arranged in a mutually parallel arrangement and in a slanted arrangement at an angle with respect to said main, central flow passage CP, said support elements thus defining between them as has been described passages P" for the flow of said liquid, in such a way that the support elements in this arrangement adopt a configuration like that of a spike like type.

In order to improve the flow in the open enclosure R of the biological reactor in the area in which the support elements are arranged in a spike like arrangement as shown by way of a singled out assembly in said Fig. 8 and as generally arranged in the open enclosure R in Figs. 10, 12 and 13, the invention provides for the area featuring the two arrays of support elements S to be confined between two lateral deflector plates PD being located at the inflow end of said area and two lateral deflector plates PD' being located at the outflow end of said area, said pairs of deflector plates in a V-shaped arrangement converging towards the central area ZC and being oppositely positioned and centrally spaced in correspondence with the above-mentioned main flow passage CP. The pair of outflow deflector plates PD' act in operational combination with respective small, adjustable swinging gates CM being provided by way of butterfly valves improving the distribution of the flow of the liquid to be purified into the central passage and into the lateral, slanted passages. As can be seen in said Fig. 8 and in Figs. 10 through 13, the inflow deflector plates PD direct the inflow CE of liquid to be purified into said area featuring the support elements.

As can be appreciated, said arrangement of the deflector plates at the inflow and outflow ends of the area being provided for the binding of the biomass onto the support elements S in combination with the swingingly adjustable gates CM as has been described, shown and illustrated define a central main flow CP along the central passage, and on either side a plurality of flow passages P'' between the support elements S of each array and a lateral flow or passage P1 determining the corresponding outflow CS.

As can be appreciated, the open enclosure R forming the anoxic and/or aerobic biological reactor forming part of the purification plant for the treatment of contaminated and/or toxic liquid residues and being the object of the present invention can have a rectangular configuration of the so-called piston flow type as shown in Figs. 9 and 10, or an oblong configuration of the so-called roundabout type, and as has been described the support elements S can in either type be arranged in a mutually parallel arrangement as diagrammatically shown in a plan-view in Fig. 7 and in Figs. 9 and 11, or in a spike like arrangement and in two separate arrays of mutually parallel and slanted elements as diagrammatically shown in a plan-view in Fig. 2 and in Figs. 10, 12 and 13.

In both cases the support elements are formed from pieces of rough, dense and mechanically tough special fabric made of plastics material as shown in Fig. 1, said fabric being either of the T1 type being shown in Figs. 2, 3A and 3B, or of the T2 type being shown in Figs. 4, 5A and 5B, this latter type being mechanically tougher than the former one.

## Claims

1. An anoxic and/or aerobic biological reactor for the purification of waste water and/or liquid residues with high concentrations of contaminating and/or toxic loads, said reactor being of the type comprising an open enclosure through which the waste water and/or liquid residues to be purified are made to flow, containing a plurality of support elements being submerged for the binding of the bacteria onto them, and comprising means being provided to propel air and/or oxygen from the bottom of the enclosure and driving means being provided to impel the flow of the waste water and/or liquid residues throughout the enclosure; **characterized in that** the pieces of fabric forming the support elements consist in a rough, tough, open texture special fabric being essentially dense and of the taffeta type and facilitating the binding of the bacteria and microorganisms onto it thus forming the biofilms on both sides of the fabric, this latter being made of a rough plastics material of high mechanical strength both in the vertical and horizontal directions, the strength along the vertical direction being the highest to thus support the weight of the support element with the biofilms bound onto its sides.

2. A reactor as per claim 1, **characterized in that** said rough and tough special fabric is submitted to a scraping/carding operation previous to its assembly as a support element thus being provided with floss on both sides of the fabric, this latter's surface roughness being thus increased and therefore enhancing the binding of the bacteria and microorganisms forming the biofilms.

3. A reactor as per claims 1 and 2, **characterized in that** the support elements being formed with said rough and tough special fabric are arranged in a mutually parallel arrangement and in an also parallel arrangement with respect to the flow of the waste water and/or liquid residues along the main axis of the open enclosure.

4. A reactor as per claim 3, **characterized in that** the open enclosure is rectangular and of the so-called piston flow type.

5. A reactor as per claim 3, **characterized in that** the open enclosure is oblong with rounded ends and of the so-called roundabout type.

6. A reactor as per claims 1 and 2, **characterized in that** the support elements formed with said rough and tough special fabric are arranged in a mutually parallel arrangement in two arrays being centrally spaced with respect to a longitudinal, central area of the open enclosure forming a main central passage for the flow of the waste water and/or liquid residues, said support elements in each array being arranged in a slanted arrangement with respect to said central flow passage and in a mutually parallel arrangement thus defining between them respective passages for the flow of the liquid to be purified, these latter flow passages extending by way of flow branchings from the central flow and thus enhancing the binding of the bacteria and microorganisms onto the support elements while at the same time being in operational combination with deflector plates being arranged in the open enclosure to enhance said flow.

7. A reactor as per claim 6, **characterized in that** the two arrays of support elements being arranged in a spaced arrangement with respect to the main, central passage for the flow of the liquid to be purified and the support elements being arranged in a mutually parallel arrangement and in a slanted arrangement with respect to said flow passage and defining between them the passages for the flow of said liquid are arranged in an essentially spike like arrangement and comprise two lateral deflector plates at the inflow end of the two arrays of support elements, said deflector plates being arranged in a converging, V-shaped arrangement and being centrally spaced in correspondence with the main flow passage, and two lateral deflector plates at the outflow end of the two arrays, these latter deflector plates being centrally spaced and in operational combination with respective small, adjustable swinging gates being provided by way of butterfly valves improving the distribution of the flow of the liquid to be purified into the passages.

8. A reactor as per claims 6 and 7, **characterized in that** the open enclosure is rectangular and of the so-called piston flow type.

9. A reactor as per claims 6 and 7, **characterized in that** the open enclosure is oblong with rounded ends and of the so-called roundabout type.

10. A reactor as per claims 1 and 2, **characterized in that** the fabric forming the support elements is of polypropylene, and **in that** the yarns of the fabric are made of mutually twisted multifilament strands.
